# EUROPEAN PATENT APPLICATION

(11) **EP 2 747 224 A1**
(43) Date of publication of application: **25.06.2014**
(21) Application number: 12008460.3
(22) Date of filing: 19.12.2012
(51) Int. Cl.: H02B 1/38, H01H 9/22, H02B 11/127

(54) **Medium voltage switchgear with cabinet door interlocking device**

(71) Applicant: ABB Technology AG, 8050 Zürich (CH)
(72) Inventor: Reuber, Christian, 47877 Willich (DE); Masmeier, Philipp, 40472 Düsseldorf (DE)
(74) Representative: Schmidt, Karl Michael

(57) **Abstract**

The invention relates to a medium voltage switchgear with interlocking device corresponding with a actuator drive, which operates a switching element via a mechanical coupling element, wherein the switching drive is movable in two end position as well as in a freely selectable middle position until which the interlocking is active between the middle position and a particular end position. In order to keep the interlocking active over a certain range of the actuator travel, the invention is, that the mechanical coupling element comprises an element which axis is inclinable to the actuation axis of the drive during operation in that way, that in both end positions as well as in the middle position, the long axis of this element is inclined to the actuation axis of the drive.

## Description

The invention relates to a medium voltage switchgear with interlocking device corresponding with the switching drive, wherein the switching drive operates a switching element via a mechanical coupling element, according to the preamble of claim 1.

A aforesaid mechanical arrangement comprising an actuator, a rod, and a movable interlocking device as well as a cabinet. In this known arrangement, the rod is fixed to the actuator and moving with it during an operation. The interlocking device is held down by the rod, when the actuator is in a particular position (in this case the lower position), so the cabinet is locked. When the actuator moves up, the rod is released from the interlocking device, so the cabinet is unlocked.

Because the rod is fixed to the actuator and directly heading to the interlocking device , the interlocking function is only working, when the rod is directly touching the interlocking device. This might be a disadvantage, when the interlocking function is needed over a certain range of the actuator-travel. It may lead to an insecure situation, when the actuator stops in another position than its dedicated end-positions (mid position).

The object of the invention is, to keep the interlocking active over a certain range of the actuator travel.

This is solved by the invention in that way, that the mechanical coupling element comprises a force flux element which force flux axis is inclinable to the actuation axis of the drive during operation in that way, that in both end positions as well as in the middle position, the long axis of force flux is inclined to the actuation axis of the drive.

According to the invention the definition of the two end positions and a middle position is not in the meaning of a three position switch. The middle position is a defined position until which the interlocking device remains active, dependant for which end positione the drive actually started the movement.

With the invention, the interlocking remains active in the middle position, so that it is prevented, that the interlocking function is only active in the defined end positions.

By the invention the inclination of the force flux axis of the force flux element according to the actuation axis results in a mechanical interlocking, which remains active along the actuator travel between a particular end position and the middle position.

The invention can be realized in several embodiments of the inventon, which are easily constructed.

First advantageous embodiment is, that the force flux element comprises a simple inclinable rod.

Second advantageous embodiment is, that the force flux element comprises a turnable lever or a toggle joint.

Third advantageous embodiment is, that the force flux element comprises a cam disk device at least at one end of the axis of the force flux element.

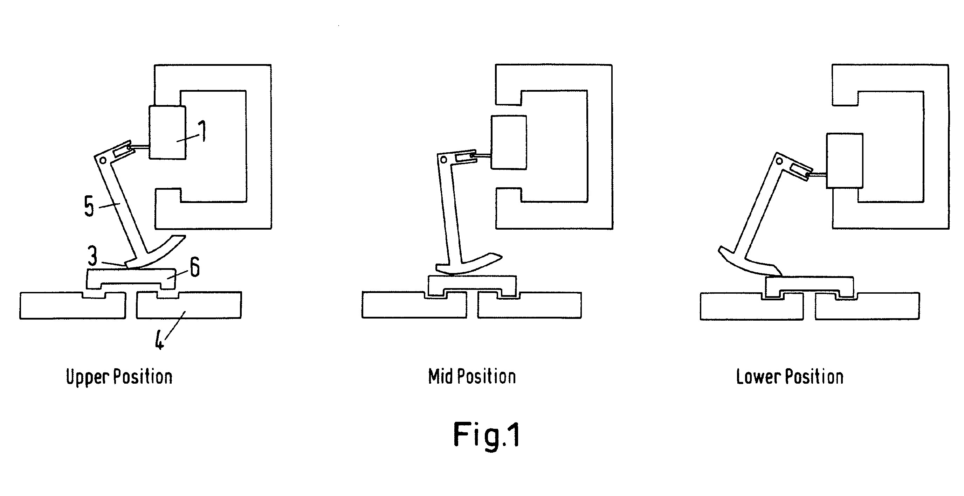

An embodiment of the invention is shown in the figure 1.
Figure 1 shows an application of a mechanical design, that allows an additional degree of freedom to control the interlocking function. A turnable lever or toggle joint 5 has been added that is moved by the linear motion of the actuator 1. Its interface to the interlocking device is different in that way that the interlocking function is not only given in the lower end position of the actuator. The interlocking device is also blocked, while the actuator is in a mid position somewhere between its end positions. This arrangement allows a higher level of safety because it is possible to release the interlocking only in the fully upper position of the actuator. The switching element 6 is movable in switching and nonswitching position of the cabinet 4.

So figure 1 shows one possible construction in the sense, that the mechanical coupling element comprises a force flux element 5 which force flux axis is inclinable to the actuation axis of the drive during operation in that way, that in both end positions as well as in the middle position, the long axis of force flux is inclined to the actuation axis of the drive.

It could be realized by a turnable lever 5 or a so called toogle joint 5 as well as by a coupled arrangement of a rod or a toogle joint together with a cam disk at least at one end of the rod or the toogle joint.

Important is the implementation of an inclineable element whichs inclination is versus the direct force flux projection between the drive itself and the switching element 6.

## Claims

1. Medium voltage switchgear with interlocking device corresponding with a actuator drive, which operates a switching element via a mechanical coupling element, wherein the switching drive is movable in two end position as well as in a freely selectable middle position until which the interlocking is active between the middle position and a particular end position,
**characterized in that**
the mechanical coupling element comprises a force flux element which force flux axis is inclinable to the actuation axis of the drive during operation **in that** way, that in both end positions as well as in the middle position, the long axis of force flux is inclined to the actuation axis of the drive.

2. Medium voltage switchgear, according to claim 1,
**characterized in that**,
the force flux element is a rod.

3. Medium voltage switchgear, according to claim 1,
**characterized in that**
the force flux element is a turnable lever.

4. Medium voltage switchgear, according to claim 1,
**characterized in that**
the force flux element is a toggle joint.

5. Medium voltage switchgear, according to one of the aforesaid claims, **characterized in that**,
the rod ot the turnable lever or the toggle joint is provided with a cam disk arrangement at at least one end of the rod or toggle joint.
